# FASCICULE DE BREVET EUROPEEN

(11) **EP 1 560 311 B1**
(45) Date de publication et mention de la délivrance du brevet: **28.04.2010**
(21) Numéro de dépôt: 05290184.0
(22) Date de dépôt: 27.01.2005
(51) Int. Cl.: H02J 1/14, B64D 11/00

(54) **Installation de gestion de puissance dans un avion**
Vorrichtung zur Energieverwaltung in einem Flugzeug
Power management arrangement in an aircraft

(30) Priorité: 30.01.2004 FR 0400917
(43) Date de publication de la demande: 03.08.2005
(73) Titulaire: Precilec, 89000 Auxerre (FR)
(72) Inventeur: Marin-Martinod, Thierry, 95690 Nesles-La-Vallee (FR); Robert, Jean-Claude, 93340 Le Raincy (FR)
(74) Mandataire: Blot, Philippe Robert Emile

(56) Documents cités:
- WO-A-98/19223
- WO-A-02/087053
- FR-A- 2 823 027
- US-A- 6 046 513

## Description

La présente invention concerne une installation de gestion de puissance dans un avion, du type comportant :
- un réseau de distribution de puissance ;
- au moins deux abonnés reliés au réseau, chaque abonné comportant un ensemble de charges consommatrices de puissance électrique et des moyens locaux de commande des charges ;
- une unité centrale de gestion de puissance propre à assurer l'allocation d'une puissance totale disponible à chaque abonné ;
- des moyens de détermination pour chaque charge de la puissance totale effectivement consommée ; et
- pour chaque abonné, des moyens d'allocation de puissance entre les différentes charges de l'abonné en fonction de la puissance totale disponible allouée à l'abonné.

Dans les avions de transport de passagers, il est nécessaire de mettre à disposition de chaque passager, un certain nombre d'équipements alimentés électriquement, ces équipements assurant un confort maximal du passager.

En particulier, chaque passager dispose couramment d'un éclairage individuel désigné par liseuse, d'une prise d'alimentation pour un ordinateur portable, d'un équipement vidéo pour la visualisation de films, d'équipements de confort tels que des dispositifs de massage et d'un ensemble d'actionneurs électriques permettant le déplacement des éléments mobiles du siège du passager.

La multiplication des dispositifs alimentés électriquement mis à la disposition de chaque passager augmente considérablement la puissance électrique consommée au sein de la cabine de l'avion.

Ainsi, il est nécessaire de gérer la puissance consommée par les passagers au cours du vol.

A cet effet, il est connu, notamment des documents US-5,754,445 et US-6,046,513, de suivre la puissance consommée par chaque passager, de comparer la puissance totale actuellement consommée par l'ensemble des passagers à une valeur de seuil prédéterminée, et d'interdire l'usage de puissance supplémentaire par un quelconque passager de l'avion si la puissance totale actuellement consommée est supérieure à la valeur de seuil prédéterminée correspondant à la puissance totale maximale pouvant être allouée aux passagers.

L'installation décrite dans le document précité permet ainsi effectivement de limiter la puissance totale consommée par l'ensemble des passagers.

Toutefois, dans la mesure où, après que la puissance totale maximale pouvant être allouée à l'ensemble des passagers est atteinte, aucun passager ne peut plus obtenir de puissance supplémentaire. Ainsi, seuls les passagers mettant en fonctionnement leurs équipements électriques les premiers peuvent disposer de puissance. Au contraire, les passagers désirant mettre en marche un équipement électrique supplémentaire alors qu'un très grand nombre de passagers consomment déjà une puissance électrique importante, ne peuvent plus obtenir de puissance.

Ainsi, une frustration peut naître chez certains passagers ne pouvant mettre en marche certains équipements à leur disposition alors que les équipements analogues fonctionnent pour le passager voisin. Un tel système de gestion peut être à l'origine de conflits entre les passagers.

En outre, la demande de brevet FR-01 04385 au nom de LABINAL décrit une installation de gestion de puissance dans laquelle une puissance totale disponible est allouée à chaque abonné. Une unité locale de gestion de puissance propre à chaque abonné assure la répartition de la puissance entre les différentes charges de l'abonné, en fonction de règles prédéterminées, afin que la puissance totale consommée ne soit pas supérieure à la puissance totale disponible allouée à l'abonné. Une telle installation permet à chaque abonné d'utiliser l'essentiel des charges à sa disposition, sous réserve qu'il consente à s'abstenir d'utiliser ces charges simultanément.

Toutefois, cette installation ne permet pas une gestion optimale de la puissance de l'avion.

L'invention a pour but de proposer une installation de gestion de puissance permettant d'optimiser l'utilisation de la puissance disponible dans un avion pour la mettre à disposition des différents passagers, avec les caractéristiques techniques de la revendication 1.

A cet effet, l'invention a pour objet une installation de gestion de puissance du type précité, selon laquelle l'unité centrale de gestion de puissance comporte des moyens de recueil d'une information représentative de la puissance totale effectivement consommée par chaque abonné, et en ce que l'unité centrale de gestion de puissance est adaptée pour allouer la puissance totale disponible à chaque abonné en fonction des puissances totales effectivement consommées par les abonnés.

Suivant des modes particuliers de réalisation, l'installation de gestion de puissance comporte l'une ou plusieurs des caractéristiques suivantes :
- ladite information représentative est la puissance totale effectivement consommée par l'abonné ;
- l'information représentative est l'ensemble des puissances élémentaires effectivement consommées par chaque charge de l'abonné ;
- l'information représentative de la puissance totale effectivement consommée est déterminée à partir d'une puissance instantanée effectivement consommée par chaque charge ;
- l'information représentative de la puissance totale effectivement consommée est déterminée à partir de puissances nominales prédéterminées pour les charges effectivement en cours de fonctionnement ;
- chaque abonné comporte une unité locale de gestion de puissance dans laquelle sont intégrés lesdits moyens d'allocation de puissance entre les différents abonnés, et chaque unité locale de gestion de puissance est reliée à l'unité centrale de gestion de puissance par une liaison de transmission d'informations bidirectionnelle pour le transfert de ladite information prédéterminée vers l'unité centrale de gestion de puissance et de la puissance totale disponible allouée à chaque abonné vers chaque abonné ;
- chaque unité locale de gestion de puissance comporte des moyens d'émission d'une requête de modification de la puissance totale disponible allouée à l'abonnée vers l'unité centrale de gestion de puissance ;
- l'unité centrale de gestion de puissance comporte des moyens de réduction de la puissance totale disponible d'un ou de chaque abonné satisfaisant un critère prédéterminé dépendant de la puissance totale effectivement consommée par l'abonné ; et
- l'unité centrale de gestion de puissance est adaptée pour allouer la puissance totale disponible à chaque abonné, de sorte que la somme des puissances totales disponibles allouées soit inférieure à une valeur de seuil.

L'invention sera mieux comprise à la lecture de la description qui va suivre, donnée uniquement à titre d'exemple et faite en se référant aux dessins, sur lesquels :
- la figure 1 est une vue schématique d'une installation de gestion de puissance selon l'invention ;
- la figure 2 est une vue schématique d'un premier mode de réalisation d'une unité locale de gestion de puissance propre à un abonné ;
- la figure 3 est un organigramme de l'algorithme mis en oeuvre dans chaque unité locale de gestion de puissance illustrée sur la figure 2 ;
- la figure 4 est une vue schématique d'un second mode de réalisation d'une unité locale de gestion de puissance propre à un abonné ;
- la figure 5 est un organigramme de l'algorithme mis en oeuvre dans chaque unité locale de gestion de puissance illustrée sur la figure 4 ; et
- la figure 6 est un organigramme de l'algorithme mis en oeuvre dans l'unité centrale de gestion de puissance de l'installation.

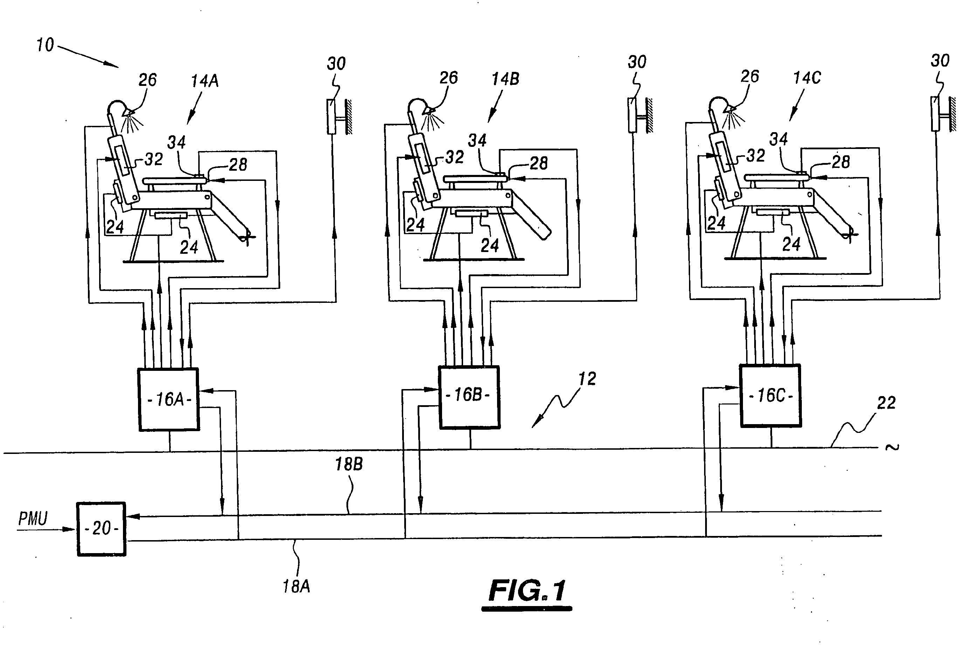

Sur la figure 1 est représentée une installation de distribution de puissance électrique 10 incorporant une installation de gestion de puissance 12. Cette installation de distribution de puissance est destinée à être installée dans un véhicule, notamment un avion de transport de passagers.

L'installation comporte un ensemble d'abonnés 14A, 14B, 14C. Chaque abonné correspond à l'ensemble des dispositifs électriques ou charges mis à la disposition d'un passager.

Par exemple, une installation selon l'invention assure la gestion de puissance auprès de soixante dix abonnés de première classe lorsque l'avion est susceptible de transporter trois cents passagers.

Dans l'installation selon l'invention, chaque abonné comporte une unité locale de gestion de puissance. Seules trois unités locales notées 16A, 16B, 16C sont représentées pour des raisons de clarté. Ces unités sont toutes identiques. Chaque unité locale de gestion de puissance est reliée, par un réseau de transmission d'informations bidirectionnel 18, à une unité centrale 20 de gestion de puissance.

A cet effet, le réseau de transmission d'informations 18 est constitué par exemple d'un bus de transfert de données auquel sont reliées l'unité centrale 20 et les unités locales 16A, 16B et 16C. Pour des raisons de clarté, sur les figures, le bus est schématisé par deux liens, l'un descendant, noté 18A, assurant la transmission d'informations de l'unité centrale de gestion de puissance 20 vers chacune des unités locales 16A, 16B, 16C et l'autre montant, noté 18B, assurant la transmission d'informations depuis chaque unité locale 16A, 16B, 16C vers l'unité centrale 20.

En outre, chaque unité locale de gestion de puissance 16A, 16B, 16C est reliée à un réseau collectif de distribution de puissance électrqiue 22.

Chaque abonné comporte un ensemble de charges consommatrices de puissance électrique. Chaque charge est reliée à l'unité locale de gestion de puissance 16A, 16B, 16C de l'abonné.

Plus précisément, dans l'exemple considéré, un siège motorisé est mis à disposition de chaque passager. Ainsi, chaque abonné comporte plusieurs actionneurs électriques 24 permettant le déplacement automatique des parties mobiles du siège afin, par exemple, de déplacer celui-ci d'une position assise à une position couchée.

En outre, chaque abonné comporte une liseuse 26, une prise 28 d'alimentation pour un ordinateur portable, un équipement 30 de reproduction vidéo, et un ensemble de dispositifs de confort 32 tels que des dispositifs de massage.

Chaque charge consommatrice mise à la disposition du passager est commandable individuellement par le passager depuis un clavier 34. Ce clavier est relié à l'unité locale de gestion de puissance 16A, 16B, 16C associée.

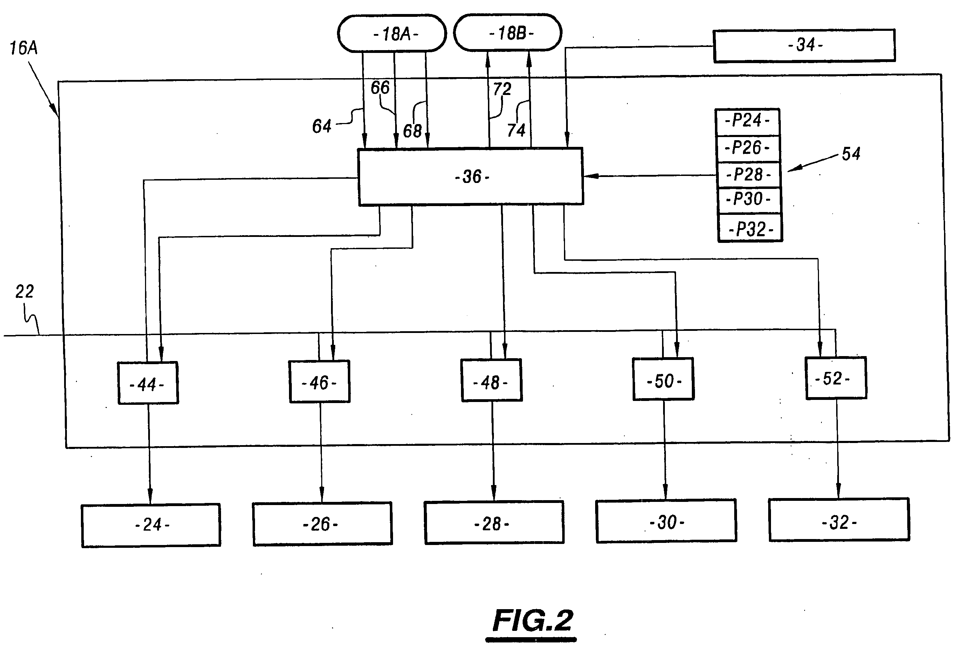

Sur la figure 2 est représentée plus en détail la structure d'une unité locale de gestion de puissance 16A. Cette unité est représentée avec sa liaison au réseau de distribution de puissance 22, aux liens 18A, 18B du réseau de transmission d'informations 18, au clavier 34 et aux charges 24 à 32.

Chaque unité locale de gestion de puissance comporte une unité de pilotage 36 constituée d'une unité de traitement d'informations apte à mettre en oeuvre un algorithme prédéterminé. L'unité de pilotage 36 est formée par exemple par un micro-contrôleur associé à un environnement adapté.

L'unité de pilotage 36 est reliée au réseau 18 par une interface de communication bidirectionnelle non représentée.

Chacune des charges 24 à 32 est reliée au réseau 22 de distribution de puissance au travers d'un étage de mise en forme du courant d'alimentation, ces étages étant notés 44, 46, 48, 50, 52, respectivement, pour les charges 24, 26, 28, 30 et 32.

Chaque étage de mise en forme du courant 44 à 52 est relié, pour sa commande, à l'unité de pilotage 36.

Sous la commande de l'unité de pilotage 36, chaque étage de mise en forme du courant assure une alimentation ou un arrêt de l'alimentation de la charge reliée en sortie, ou une mise en forme particulière du courant, afin de réduire la puissance consommée par cette charge.

En particulier, dans le cas des actionneurs 24, l'étage 44 de mise en forme du courant d'alimentation est adapté pour produire un courant modifiant la vitesse des actionneurs afin de faire varier la puissance consommée.

Cette variation de vitesse est par exemple réalisée à l'aide d'une régulation de type PWM (modulation à largeur d'impulsion).

Dans la pratique, les étages de mise en forme du courant d'alimentation comportent un unique convertisseur de courant, ce convertisseur étant commun à chacun des étages de mise en forme. Ce convertisseur incorpore par exemple un transformateur. En sortie du convertisseur commun, chaque étage de mise en forme comporte des moyens de commutation et de régulation du courant qui lui sont propres.

Dans le mode de réalisation illustré sur la figure 2, l'unité locale de gestion de puissance comporte des moyens de mémorisation 54 reliés à l'unité de pilotage 36. Ces moyens de mémorisation 54 contiennent, pour chaque charge reliée à l'unité locale de gestion de puissance, une valeur caractéristique notée P24 à P32 pour les charges 24 à 32. Cette valeur caractéristique est égale à la puissance nominale consommée par la charge associée, lors de son fonctionnement.

Par ailleurs, l'unité de pilotage 36 est adaptée pour recevoir, sur le lien descendant 18A du réseau de transmission d'informations 18, un ensemble de paramètres d'exploitation permettant de modifier la commande des charges imposée par l'utilisateur depuis le clavier 34.

Bien que le réseau de transmission d'informations 18 puisse être de tout type adapté, pour des raisons de clarté de la figure 2, chaque paramètre d'exploitation est supposée être communiquée à l'unité de pilotage 36 sur une entrée spécifique.

En particulier, sur une première entrée 64, l'unité de pilotage 36 reçoit une valeur Pdᵢ représentative d'une puissance totale disponible pour l'abonné i considéré.

Sur une entrée 66, l'unité de pilotage 36 est adaptée pour recevoir une information d'altitude A. Cette information binaire indique si l'altitude est supérieure à 10 000 pieds ou inférieure à 10 000 pieds.

L'entrée 68 est adaptée pour recevoir une information T représentative de la présence de turbulences dans la zone traversée par l'avion.

De même, l'unité de pilotage 36 est adaptée pour adresser à l'unité centrale de gestion de puissance 20, sur le lien montant 18B du réseau de transmission d'informations, un ensemble de variables d'exploitation permettant à l'unité centrale de gestion de puissance 20 de répartir la puissance disponible entre les différents abonnés, et notamment de définir une puissance totale disponible Pdᵢ allouée à chaque abonné.

Comme précédemment, bien que le réseau de transmission d'informations 18 puisse être de tout type adapté, chaque variable d'exploitation est supposée être communiquée depuis l'unité de pilotage sur une sortie spécifique.

Une première sortie 72 est adaptée pour adresser, à l'unité centrale de gestion de puissance, une requête d'augmentation de la puissance totale disponible Pdᵢ allouée à l'abonné. Une seconde sortie 74 permet la transmission vers l'unité centrale de pilotage d'informations représentatives de la puissance totale notée Pcᵢ effectivement consommée par l'abonné i. Cette information représentative peut prendre différentes formes et des exemples seront donnés dans la suite de la description.

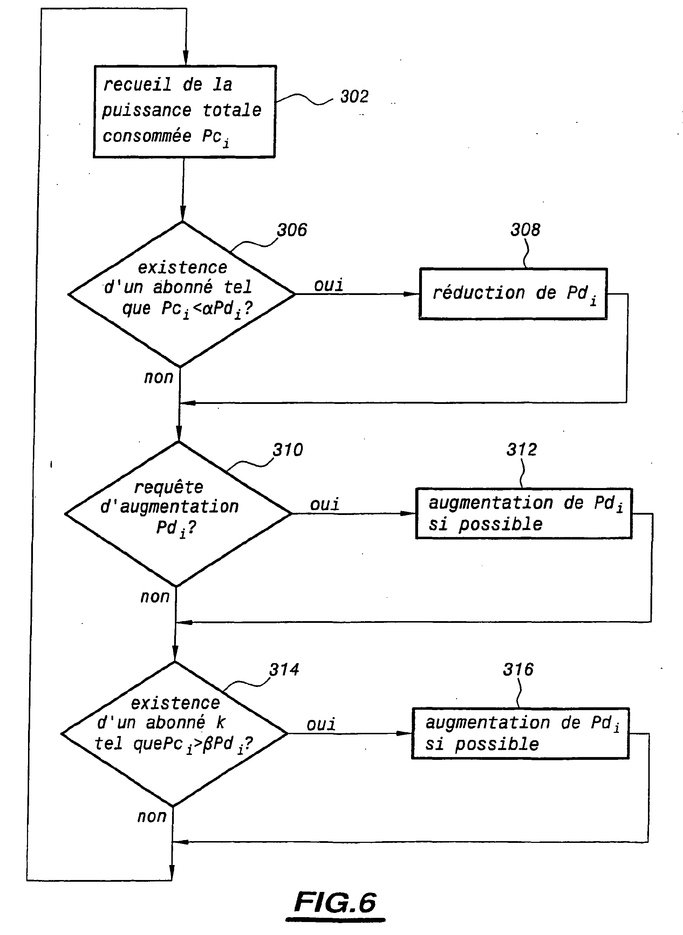

L'unité centrale de gestion de puissance 20 est adaptée pour calculer et pour adresser à chaque unité locale de gestion de puissance 16A, 16B, 16C, les paramètres d'exploitation, à savoir la puissance totale disponible Pdᵢ allouée à l'abonné i correspondant et des informations A, T représentatives de l'altitude de l'avion ainsi que de la présence de turbulences dans la région traversée. Le calcul de la puissance totale disponible Pdᵢ allouée à un abonné i sera décrit en regard de la figure 6.

L'unité centrale de gestion de puissance 20 comporte une entrée de réception d'une valeur de puissance maximale utilisable PMU qui ne peut être dépassée pour l'ensemble des abonnés. Cette puissance maximale utilisable PMU est fournie par un autre calculateur de l'avion en fonction de la puissance effectivement disponible dans l'avion.

L'installation de gestion de puissance 12 est adaptée pour permettre à chaque abonné d'utiliser seulement une puissance totale maximale Pmaxᵢ allouée à l'abonné en fonction des paramètres d'exploitation. A cet effet, l'unité locale de gestion de puissance 36 de chaque abonné est adaptée pour, en fonction des demandes formulées par l'utilisateur depuis le clavier 34, commander d'une manière adaptée chacune des charges mises à la disposition de l'utilisateur afin que la puissance totale consommée par l'abonné soit toujours inférieure à la puissance totale maximale Pmaxᵢ allouée à l'abonné. La puissance totale maximale Pmaxᵢ est déterminée par chaque unité locale de gestion de puissance à partir de la puissance totale disponible Pdᵢ allouée à l'abonné i et des conditions de vol représentées par les informations A et T.

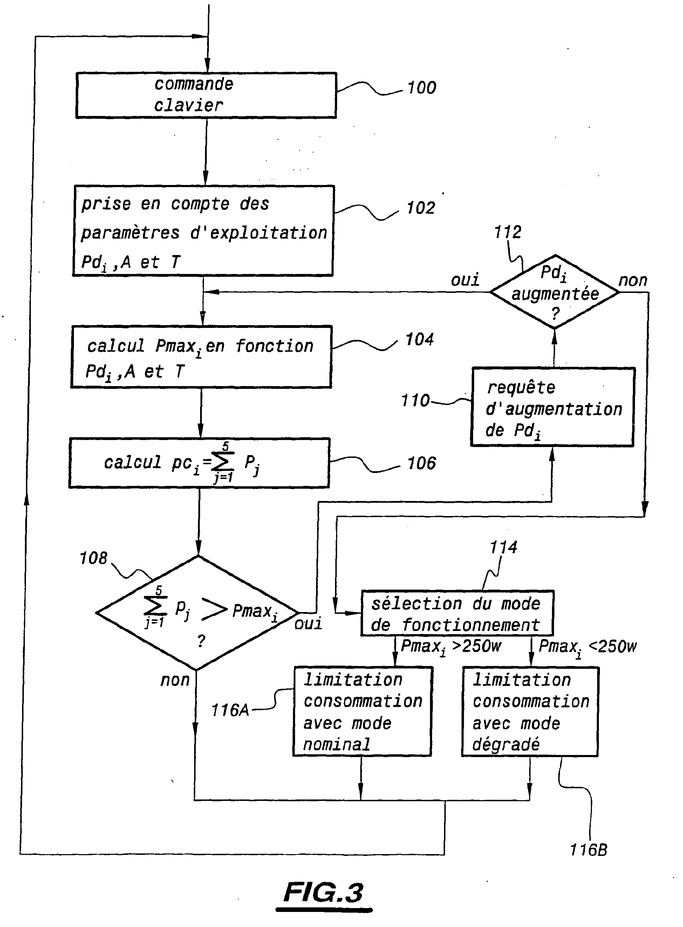

A cet effet, l'unité de pilotage 36 de chaque abonné met en oeuvre l'algorithme illustré sur la figure 3.

A l'étape 100, l'unité de pilotage 36 scrute le clavier 34 en vue de déterminer les demandes de l'utilisateur.

A l'étape 102, les paramètres d'exploitation Pdᵢ, A et T adressés par l'unité centrale de gestion de puissance 20 sont pris en compte.

A partir de ces paramètres d'exploitation, le calcul de la puissance totale maximale allouée Pmaxᵢ est effectué à l'étape 104. Cette puissance totale maximale allouée à l'abonné prend en compte l'ensemble des paramètres d'exploitation reçus sur les entrées 64 à 68. En particulier, la puissance totale disponible Pdᵢ est prise en compte, ainsi que l'altitude A de l'avion et la présence de turbulences T dans la zone traversée.

A l'étape 106, l'unité de pilotage 36 calcule une estimation de la puissance totale Pcᵢ effectivement consommée à l'instant déterminé. A cet effet, l'unité de pilotage détermine la somme des puissances nominales Pj mémorisées dans les moyens 54 pour les charges 24 à 32 effectivement en cours de fonctionnement.

A l'étape 108, l'estimation de la puissance totale Pcᵢ effectivement consommée est comparée à la puissance totale maximale allouée Pmaxᵢ.

Si cette estimation de la puissance totale Pcᵢ effectivement consommée est inférieure à la puissance totale maximale allouée Pmaxᵢ, l'algorithme est à nouveau mis en oeuvre.

Au contraire, si l'estimation de la puissance totale Pcᵢ effectivement consommée est supérieure à la puissance totale maximale allouée Pmaxᵢ, une requête d'augmentation de la puissance totale disponible Pdᵢ allouée à l'abonné est adressée par l'unité de pilotage 36 à l'unité centrale de gestion de puissance 20 lors de l'étape 110 grâce au lien montant 18B.

Suite à cette requête, et comme cela sera détaillé en regard de l'organigramme de la figure 3, l'unité centrale de gestion de puissance 20 retourne, en réponse, à l'abonné requérant, une nouvelle puissance totale disponible Pdᵢ ou une information représentative d'un refus d'allocation d'une puissance totale disponible plus élevée.

La réponse est analysée, à l'étape 112, et, si une puissance totale disponible Pdᵢ plus élevée est allouée, les étapes 104 et suivantes sont à nouveau mises en oeuvre. En revanche, si un refus d'allouer une puissance totale disponible Pdᵢ plus élevée est retournée, une phase de limitation de la consommation est mise en oeuvre localement par l'unité de pilotage 36 de l'unité locale de gestion concernée.

Dans ce dernier cas, une étape 114 de sélection d'un mode de fonctionnement est d'abord mise en oeuvre. Cette étape de sélection définit le mode de fonctionnement de l'abonné en fonction de la puissance totale maximale allouée Pmaxᵢ. Chaque mode de fonctionnement définit un ensemble de règles de priorité permettant de déterminer les charges pouvant être alimentées, et les charges devant être arrêtées ou pour lesquelles la puissance consommée doit être réduite en fonction de la puissance totale maximale allouée Pmaxᵢ qui est par exemple supérieure à 250 W.

Dans le mode de mise en oeuvre envisagé, deux modes de fonctionnement sont prévus, un premier mode de fonctionnement correspondant à un mode nominal dans lequel la puissance totale maximale allouée Pmaxᵢ est supérieure à 250 W et un mode de fonctionnement dégradé dans lequel la puissance totale maximale allouée Pmaxᵢ est inférieure à 250 W.

A l'issue de l'étape de sélection 114, et en fonction du mode de fonctionnement sélectionné, une étape 116A ou 116B de limitation de la consommation est mise en oeuvre. Cette étape définit les charges dont l'alimentation doit être arrêtée, ainsi que les charges dont la puissance consommée doit être réduite, ceci en fonction des règles de priorité propres au mode de fonctionnement sélectionné à l'étape 114.

Dans le tableau qui suit est donnée, à titre d'exemple, pour chacune des charges, la puissance nominale mémorisée dans la mémoire 54. Dans ce même tableau sont illustrés différentes situations correspondant à des puissances totales maximales allouées Pmaxᵢ différentes et à des situations de vol différentes.

| | Liseuse | PC | Vidéo | Confort | Actionneurs | Total |
|---|---|---|---|---|---|---|
| Puissance nominale | 10 | 75 | 100 | 50 | 100 | 335 |
| Pmaxᵢ mode | | | | | | |
| 1) 300 W Nominal | a) 10 | inhibé | 100 | 50 | 100 | 260 |
| | b) 10 | 75 | 100 | 50 | arrêté | 235 |
| | c) 10 | 75 | 100 | inhibé | 100 | 285 |
| 2) 200 W Dégradé | a) éteint | 75 | 100 | inhibé | arrêté | 175 |
| | b) éteint | inhibé | 100 | inhibé | 100 | 200 |
| | c) 10 | inhibé | 100 | inhibé | 90 | 200 |
| 3) Turbulences ou | | | | | | |
| < 10 000 pieds | 10 | inhibé | inhibé | inhibé | 100 | 110 |

Dans le tableau qui précède, les termes "éteint" et "arrêté" signifient que le fonctionnement de la charge en cause n'est pas requis par le passager. Le terme "inhibé" signifie que l'unité locale de gestion de puissance interdit l'alimentation de la charge en cause quelle que soit la commande du passager pour cette charge.

Dans l'exemple indiqué ci-dessus, la somme des puissances nominales des charges est de 335 watts.

Dans l'algorithme de gestion utilisé, les équipements prioritaires sont la liseuse 26 et les actionneurs 24. Ainsi, leur fonctionnement est privilégié par rapport à d'autres équipements, en cas de puissance totale maximale allouée Pmaxᵢ insuffisante pour satisfaire tous les besoins.

Une priorité est établie entre le PC (prise d'alimentation pour un ordinateur 28), la Vidéo et le Confort, par exemple : d'abord la Vidéo, puis le PC et enfin le Confort. (Après les priorités liseuse et actionneurs).

Pour l'exemple 1), la puissance totale maximale allouée Pmaxi (300 watts : mode nominal) est inférieure à la somme des puissances nominales des charges. Dans ce cas, seuls deux équipements sur trois parmi le PC, la Vidéo et le Confort sont autorisés.

Pour le cas a) de l'exemple 1), si la Vidéo et le Confort sont allumés et que les actionneurs sont en mouvement, l'utilisateur ne pourra pas alimenter le PC.

Pour le cas b) de l'exemple 1), si les actionneurs ne sont pas en mouvement, le PC, la Vidéo et le Confort peuvent fonctionner.

Si l'utilisateur met en marche les actionneurs, cas b) vers le cas c), le confort sera arrêté, celui-ci étant défini comme équipement le moins prioritaire dans le mode nominal.

Pour l'exemple 2), la puissance totale maximale allouée Pmaxᵢ est égale à 200 watts. Le mode dégradé est alors sélectionné à l'étape 114. Dans ce mode, seuls deux équipements sur trois (PC, Vidéo, Confort) peuvent être alimentés quand les actionneurs ne sont pas en mouvement (cas a), et un seul équipement peut être alimenté quand les actionneurs sont en mouvement (cas b).

En mode dégradé, la puissance des actionneurs peut être volontairement limité en fonction des équipements allumés.

Lorsque les actionneurs sont en mouvement et que la liseuse est allumée (cas c), la puissance des actionneurs est réduite. Ceci est réalisé par exemple en ralentissant les actionneurs lorsqu'ils fonctionnent simultanément pour ne pas dépasser 90 watts, ou en faisant fonctionner les actionneurs l'un après l'autre.

Pour l'exemple 3), les trois équipements PC, Vidéo et Confort sont inhibés en cas de turbulences ou d'altitude inférieure à 10 000 pieds.

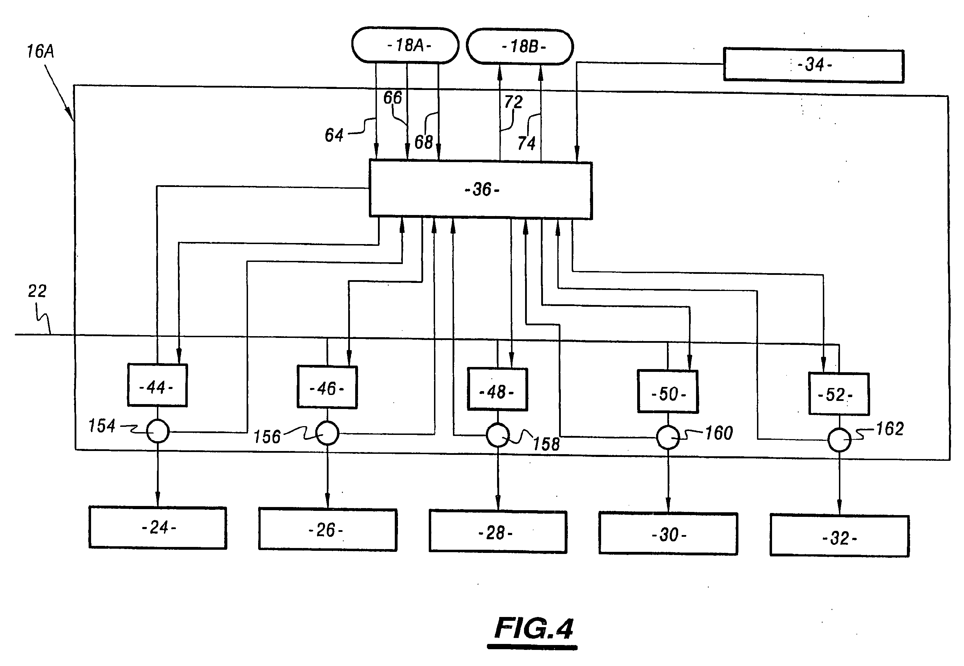

Sur la figure 4, est représentée une variante de réalisation d'une unité locale de gestion de puissance 16A selon l'invention. Cette unité reprend la structure générale de l'unité décrite en regard de la figure 2. Ainsi, les éléments identiques ou analogues sont désignés par les mêmes numéros de référence.

Toutefois, dans cette variante de réalisation, la mémoire 54 est supprimée.

En revanche, chaque unité locale de gestion de puissance comporte un capteur de courant 154, 156, 158, 160, 162 qui est disposé entre l'unité de mise en forme du courant et la charge associée. Ces capteurs de courant sont chacun reliés à l'unité de pilotage 36 et sont adaptés pour adresser à celle-ci une information représentative de l'intensité d'alimentation de la charge. Cette information est représentative de la puissance instantanée notée pⱼ effectivement consommée par la charge j associée, cette dernière étant égale au produit de la tension d'alimentation par l'intensité mesurée.

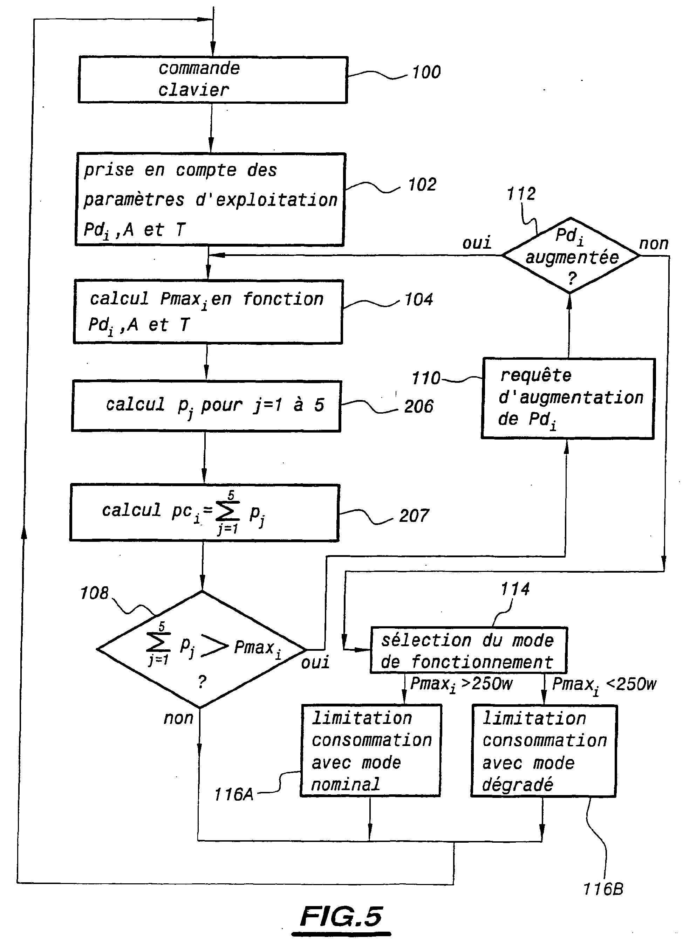

Par ailleurs, l'unité de pilotage 36 met en oeuvre un algorithme illustré sur la figure 5 qui est légèrement différent de l'algorithme illustré sur la figure 3.

En particulier, cet algorithme est adapté pour déterminer, à partir des intensités effectivement fournies à chaque charge, la puissance instantanée pⱼ réellement consommée à chaque instant par la charge en cause.

Ainsi, comme illustré sur la figure 5, l'algorithme mis en oeuvre reprend les trois premières étapes 100 à 104.

Toutefois, l'étape 106 est remplacée par une étape 206 de calcul, pour chaque charge j, de la puissance élémentaire instantanée pⱼ effectivement consommée, cette puissance étant déterminée à partir de l'intensité mesurée par le capteur associé 154 à 162.

Cette étape est suivie d'une étape 207 de sommation des puissances élémentaires instantanées ainsi calculées pour déterminer la puissance totale Pcᵢ effectivement consommée à l'instant déterminé par l'ensemble des charges reliées à l'unité locale de gestion.

La suite de l'algorithme mis en oeuvre est identique à l'algorithme décrit en regard de la figure 3.

Sur la figure 6 est illustré l'algorithme mis en oeuvre en continu par l'unité centrale de gestion de puissance lors du fonctionnement de l'installation. Cet algorithme cyclique est mis en oeuvre en boucle et est adapté pour assurer le calcul et la modification des valeurs de puissance totale disponible Pdᵢ allouée à chaque abonné i, en fonction des conditions effectives de fonctionnement de l'ensemble des abonnés, et de la puissance maximale utilisable PMU.

A l'étape 302, l'unité centrale de gestion de puissance 20 recueille, pour chaque unité locale de gestion de puissance 16A, 16B, 16C la puissance totale Pcᵢ effectivement consommée par l'abonné correspondant. Pour ce faire, les unités de gestion de puissance 16A, 16B, 16C adressent périodiquement, à une fréquence de quelques hertz, une information représentative de la puissance totale Pcᵢ effectivement consommée par l'abonné associé.

Dans l'installation selon le premier mode de réalisation illustré aux figures 2 et 3, la puissance totale effectivement consommée Pcᵢ est donnée par la somme des puissances nominales Pⱼ mémorisées pour les seules charges j effectivement en cours de fonctionnement.

Dans le second mode de réalisation illustré aux figures 5 et 6, la puissance totale effectivement consommée Pcᵢ est donnée par la somme des puissances instantanées pⱼ réellement consommées par les charges j de l'abonné i.

Suivant d'autres modes de réalisation, l'information représentative de la puissance totale effectivement consommée est constituée, suivant le cas, soit de l'ensemble des puissances nominales Pⱼ des charges effectivement en cours de fonctionnement, soit, dans un autre mode de réalisation, de l'ensemble des puissances instantanées pⱼ réellement consommées par les charges de l'abonné.

A l'étape 306, il est déterminé s'il existe des abonnés pour lesquels la puissance totale effectivement consommée Pcᵢ est très largement inférieure à la puissance totale disponible Pdᵢ allouée à cet abonné. A cet effet, la puissance totale effectivement consommée Pcᵢ est comparée à αPdᵢ où α est compris entre 0 et 1. La valeur de α est de préférence proche de 0 et par exemple pris égal à 0,2.

Si tel est le cas, la puissance totale disponible Pdᵢ allouée à l'abonné i est réduite à l'étape 306. Celle-ci est par exemple divisée par deux. Les étapes 306 et suivantes sont alors à nouveau mises en oeuvre.

A l'étape 310, il est analysé si une requête d'augmentation de puissance totale disponible Pdᵢ est adressée par un abonné i. Si tel est le cas, la puissance totale disponible Pdᵢ de l'abonné est augmentée d'une valeur d'augmentation prédéterminée, sous réserve que la somme des puissances totales disponibles Pdᵢ allouées à l'ensemble des abonnés soit, après cette augmentation, inférieure à la puissance maximale utilisable PMU.

A l'issue de l'étape 312, les étapes 306 et suivantes sont à nouveau mises en oeuvre.

A l'étape 314, il est déterminé s'il existe un abonné i dont la puissance effectivement consommée est très proche de la puissance totale disponible Pdᵢ. A cet effet, la puissance totale effectivement consommée Pcᵢ est comparée à βPdᵢ où β est compris entre 0 et 1. β est supérieur à α et est proche de 1. β est par exemple pris égal à 0,8.

Si tel est le cas, la puissance totale disponible Pdᵢ est augmentée pour l'abonné i dans la mesure où, après cette augmentation, la somme des puissances totales disponibles Pdᵢ est inférieure à la puissance maximale utilisable PMU.

Les étapes 306 et suivantes sont à nouveau mises en oeuvre.

A l'issue de l'étape 314, les étapes 302 et suivantes sont à nouveau mises en oeuvre.

On comprend qu'avec un tel procédé, les puissances totales disponibles Pdᵢ allouées à chaque abonné sont constamment réajustées pour tenir compte des puissances effectivement consommées Pcᵢ par chaque abonné. Ainsi, la puissance totale disponible allouée aux abonnés faiblement consommateurs de puissance est réduite alors que la puissance totale disponible allouée aux abonnés requérant beaucoup de puissance est augmentée, ce transfert de puissance disponible d'un abonné vers l'autre garantissant une satisfaction optimale de l'ensemble des abonnés, tout en garantissant que la somme des puissances totales effectivement consommées reste inférieure à la puissance maximale utilisable PMU.

On conçoit qu'une telle installation de gestion de puissance permet, de plus, de garantir à chaque passager un recours à chacun des équipements dont il dispose pour autant qu'il ne les utilise par tous en même temps.

De plus, la puissance totale disponible allouée à l'ensemble des passagers est limitée, tout en évitant que certains passagers soient privés de l'usage de tous leurs équipements si beaucoup d'autres passagers sont déjà en train d'utiliser leurs équipements.

## Revendications

1. Installation (10) de gestion de puissance dans un avion comportant :
- un réseau de distribution de puissance (22) ;
- au moins deux abonnés (14A, 14B, 14C) reliés au réseau (22), chaque abonné (14A, 14B, 14C) comportant un ensemble de charges (24, 26, 28, 30, 32) consommatrices de puissance électrique et des moyens locaux (34) de commande des charges ;
- une unité centrale de gestion de puissance (20) propre à assurer l'allocation d'une puissance totale disponible (Pdᵢ) à chaque abonné, l'unité centrale de gestion de puissance (20) comportant des moyens (18B) de recueil d'une information représentative de la puissance totale (Pcᵢ) effectivement consommée par chaque abonné ;
- des moyens de détermination pour chaque charge (24, 26, 28, 30, 32) de la puissance totale effectivement consommée ; et
- pour chaque abonné (14A, 14B, 14C), des moyens (36) d'allocation de puissance entre les différentes charges (24, 26, 28, 30, 32) de l'abonné en fonction de la puissance totale disponible (Pdᵢ) allouée à l'abonné,
**caractérisée en ce que** l'unité centrale de gestion de puissance (20) est adaptée pour allouer une nouvelle puissance totale disponible (Pdᵢ) à chaque abonné en fonction des puissances totales (Pcᵢ) effectivement consommées par les abonnés (14A, 14B, 14C).

2. Installation selon la revendication 1, **caractérisée en ce que** ladite information représentative est la puissance totale effectivement consommée (Pcᵢ) par l'abonné.

3. Installation selon la revendication 1, **caractérisée en ce que** ladite information représentative est l'ensemble des puissances élémentaires (Pⱼ ; Pⱼ) effectivement consommées par chaque charge (24, 26, 28, 30, 32) de l'abonné.

4. Installation selon l'une quelconque des revendications précédentes, **caractérisée en ce que** le moyen de recueil d'une information représentative de la puissance totale effectivement consommée (Pcᵢ) est adapté pour déterminer telle puissance à partir d'une puissance instantanée (pⱼ) effectivement consommée par chaque charge (24, 26, 28, 30, 32).

5. Installation selon l'une quelconque des revendications précédentes, **caractérisée en ce que** le moyen de recueil d'une information représentative de la puissance totale effectivement consommée (Pcᵢ) est adapté pour déterminer telle puissance à partir de puissances nominales prédéterminées (Pⱼ) pour les charges effectivement en cours de fonctionnement.

6. Installation selon l'une quelconque des revendications précédentes, **caractérisée en ce que** chaque abonné comporte une unité locale de gestion de puissance (16A, 16B, 16C) dans laquelle sont intégrés lesdits moyens (36) d'allocation de puissance entre les différents abonnés, et **en ce que** chaque unité locale de gestion de puissance (16A, 16B, 16C) est reliée à l'unité centrale de gestion de puissance (20) par une liaison de transmission d'informations (18) bidirectionnelle pour le transfert de ladite information prédéterminée vers l'unité centrale de gestion de puissance (20) et de la puissance totale disponible (Pdᵢ) allouée à chaque abonné vers chaque abonné.

7. Installation selon la revendication 6, **caractérisé en ce que** chaque unité locale de gestion de puissance (16A, 16B, 16C) comporte des moyens d'émission d'une requête de modification de la puissance totale disponible (Pdᵢ) allouée à l'abonnée vers l'unité centrale de gestion de puissance (20).

8. Installation selon l'une quelconque des revendications précédentes, **caractérisée en ce que** l'unité centrale de gestion de puissance (20) comporte des moyens de réduction de la puissance totale disponible (Pdᵢ) d'un ou de chaque abonné (14A, 14B, 14C) satisfaisant un critère prédéterminé dépendant de la puissance totale effectivement consommée (Pcᵢ) par l'abonné.

9. Installation selon l'une quelconque des revendications précédentes, **caractérisée en ce que** l'unité centrale de gestion de puissance (20) est adaptée pour allouer la puissance totale disponible (Pdᵢ) à chaque abonné, de sorte que la somme des puissances totales disponibles allouées soit inférieure à une valeur de seuil (PMU).

## Claims

1. Power management arrangement (10) in an aircraft comprising:
● a power distribution network (22);
● at least two consumers (14A, 14B, 14C) connected to the network (22), each consumer (14A, 14B, 14C) having a set of electric power consumption loads (24, 26, 28, 30, 32) and local means (34) for controlling the loads;
● its own central power management unit (20) to ensure allocation of a total available power (Pdᵢ) to each consumer, wherein the central power management unit (20) comprises means (18B) for collecting information representing the total power actually consumed (Pcᵢ) by each consumer;
● means for determining the total power actually consumed for each load (24, 26, 28, 30, 32); and
● means (36) for each consumer (14A, 14B, 14C) for allocating power between the different loads (24, 26, 28, 30, 32) of the consumer as a function of the total available power (Pdᵢ) assigned to the consumer,
**characterised in that** the central power management unit (20) is fitted to assign a new total available power (Pdᵢ) to each consumer as a function of the total amounts of power actually consumed (Pcᵢ) by the consumers (14A, 14B, 14C).

2. Arrangement according to claim 1, **characterised in that** said representative information is the total amount of power actually consumed (Pcᵢ) by the consumer.

3. Arrangement according to claim 1, **characterised in that** said representative information is all the basic amounts of power (Pᵢ; pᵢ) actually consumed by each load (24, 26, 28, 30, 32) of the consumer.

4. Arrangement according to any one of the preceding claims, **characterised in that** the means for collecting information representative of the total power actually consumed (Pcᵢ) is arranged to determine such a power from an instantaneous power (pᵢ) actually consumed by each load (24, 26, 28, 30, 32).

5. Arrangement according to any one of the preceding claims, **characterised in that** the means for collecting information representative of the total power actually consumed (Pcᵢ) is arranged to determine such a power from predetermined nominal amounts of power (Pᵢ) for the loads actually in operation.

6. Arrangement according to any one of the preceding claims, **characterised in that** each consumer has a local power management unit (16A, 16B, 16C), into which said means (36) for allocating power between the different consumers are integrated, and **in that** each local power management unit (16A, 16B, 16C) is connected to the central power management unit (20) by a bidirectional data transmission link (18) for the transfer of said predetermined information to the central power management unit (20) and the transfer to each consumer of the total available power (Pdᵢ) assigned to each consumer.

7. Arrangement according to claim 6, **characterised in that** each local power management unit (16A, 16B, 16C) comprises means for transmitting a request for modification of the total available power (Pdᵢ) assigned to the consumer to the central power management unit (20).

8. Arrangement according to any one of the preceding claims, **characterised in that** the central power management unit (20) comprises means for reducing the total available power (Pdᵢ) for a or each consumer (14A, 14B, 14C) meeting a predetermined criterion dependent on the total power actually consumed (Pcᵢ) by the consumer.

9. Arrangement according to any one of the preceding claims, **characterised in that** the central power management unit (20) is arranged to assign the total available power (Pdᵢ) to each consumer so that the sum of the total amounts of available power assigned is less than a threshold value (PMU).

## Patentansprüche

1. Anlage (10) zur Energieverwaltung in einem Flugzeug, umfassend:
- ein Energieverteilungsnetz (22);
- mindestens zwei mit dem Netz (22) verbundene Teilnehmer (14A, 14B, 14C), wobei jeder Teilnehmer (14A, 14B, 14C) eine Anordnung von Lasten (24, 26, 28, 30, 32), die elektrische Leistung verbrauchen, und lokale Mittel (34) zur Steuerung der Lasten umfasst;
- eine zentrale Einheit (20) zur Energieverwaltung, die geeignet ist, die Zuteilung einer verfügbaren Gesamtleistung (Pdᵢ) an jeden Teilnehmer sicherzustellen, wobei die zentrale Einheit (20) zur Energieverwaltung Mittel (18B) zur Erfassung einer Information umfasst, die für die tatsächlich von jedem Teilnehmer verbrauchte Gesamtleistung (Pcᵢ) repräsentativ ist;
- Mittel zur Bestimmung der tatsächlich verbrauchten Gesamtleistung für jede Last (24, 26, 28, 30, 32) und
- für jeden Teilnehmer (14A, 14B, 14C) Mittel (36) zur Leistungszuteilung zu den unterschiedlichen Lasten (24, 26, 28, 30, 32) des Teilnehmers abhängig von der dem Teilnehmer zugeordneten verfügbaren Gesamtleistung (Pdi), **dadurch gekennzeichnet, dass**
die zentrale Einheit (20) der Energieverwaltung ausgebildet ist, um eine neue für jeden Teilnehmer verfügbare Gesamtleistung (Pdi) abhängig von den Gesamtleistungen (Pcᵢ), die tatsächlich von den Teilnehmern (14A, 14B, 14C) verbraucht werden, zuzuteilen.

2. Anlage nach Anspruch 1, **dadurch gekennzeichnet, dass** die repräsentative Information die von dem Teilnehmer tatsächlich verbrauchte Gesamtleistung (Pcᵢ) ist.

3. Anlage nach Anspruch 1, **dadurch gekennzeichnet, dass** die repräsentative Information die Gesamtheit der elementaren Leistungen (Pⱼ; pⱼ) ist, die tatsächlich von jeder Last (24, 26, 28, 30, 32) des Teilnehmers verbraucht wird.

4. Anlage nach einem beliebigen der vorhergehenden Ansprüche, **dadurch gekennzeichnet, dass** das Mittel zum Erfassen einer Information, die repräsentativ für die tatsächlich verbrauchte Gesamtleistung (Pcᵢ) ist, angepasst ist, um diese Leistung aus einer momentanen, tatsächlich von jeder Last (24, 26, 28, 30, 32) verbrauchten Leistung (pⱼ) zu bestimmen.

5. Anlage nach einem beliebigen der vorhergehenden Ansprüche, **dadurch gekennzeichnet, dass** das Mittel für die Erfassung einer Information, die repräsentativ für die tatsächlich verbrauchte Gesamtleistung (Pcᵢ) ist, angepasst ist, um eine solche Leistung aus den Nominalleistungen (Pⱼ) zu bestimmen, die für die Lasten tatsächlich während des Betriebes vorbestimmt werden.

6. Anlage nach einem beliebigen der vorhergehenden Ansprüche, **dadurch gekennzeichnet, dass** jeder Teilnehmer eine lokale Einheit zur Energieverwaltung (16A, 16B, 16C) umfasst, in der die Mittel (36) zur Zuteilung der Leistung zu den unterschiedlichen Teilnehmern integriert sind, und dass jede lokale Einheit zur Energieverwaltung (16A, 16B, 16C) mit der zentralen Einheit (20) zur Energieverwaltung durch eine bidirektionale Verbindung zur Übertragung von Informationen verbunden ist für die Übertragung der vorbestimmten Information zur zentralen Einheit (20) zur Energieverwaltung und der gesamten verfügbaren Leistung (Pdᵢ), die jedem Teilnehmer zugeteilt ist, zu jedem Teilnehmer.

7. Anlage nach Anspruch 6, **dadurch gekennzeichnet, dass** jede lokale Einheit (16A, 16B, 16C) zur Energieverwaltung Mittel zum Senden einer Anfrage zur Modifikation der verfügbaren Gesamtleistung (Pdᵢ), die dem Teilnehmer zugeteilt ist, zur zentralen Einheit (20) für die Energieverwaltung umfasst.

8. Anlage nach einem beliebigen der vorhergehenden Ansprüche, **dadurch gekennzeichnet, dass** die zentrale Einheit (20) zur Energieverwaltung Mittel zum Reduzieren der gesamten verfügbaren Leistung (Pdᵢ) eines oder jedes Teilnehmers (14A, 14B, 14C) umfasst, die ein vorbestimmtes Kriterium erfüllen, das von der tatsächlich vom Teilnehmer verbrauchten Gesamtleistung (Pcᵢ) abhängt.

9. Anlage nach einem beliebigen der vorhergehenden Ansprüche, **dadurch gekennzeichnet, dass** die zentrale Einheit (20) zur Energieverwaltung angepasst ist, um die für jeden Teilnehmer verfügbare Gesamtleistung (Pdᵢ) derart zuzuteilen, dass die Summe der verfügbaren zugeteilten Gesamtleistungen kleiner ist als ein Schwellenwert (PMU).
